# EUROPÄISCHE PATENTSCHRIFT

(11) **EP 2 505 055 B1**
(45) Veröffentlichungstag und Bekanntmachung des Hinweises auf die Patenterteilung: **23.10.2013**
(21) Anmeldenummer: 12002272.8
(22) Anmeldetag: 29.03.2012
(51) Int. Cl.: A01K 5/00

(54) **Mischbehälter für Futtermischwagen**
Mix container for feed mixing vehicle
Récipient de mélange pour chariots de mélange de fourrage

(30) Priorität: 30.03.2011 DE 202011004620 U
(43) Veröffentlichungstag der Anmeldung: 03.10.2012
(73) Patentinhaber: Mayer Verwaltungs GmbH & Co. KG, 84529 Tittmoning (DE)
(72) Erfinder: Mayer, Georg, 84529 Tittmoning (DE)
(74) Vertreter: Bauer, Friedrich

(56) Entgegenhaltungen:
- EP-A2- 1 068 797
- WO-A1-2012/074377
- DE-U1- 20 104 283
- NL-C2- 2 000 506
- US-A- 4 741 625

## Beschreibung

Die Erfindung betrifft einen Mischbehälter für Futtermischwagen gemäß dem Oberbegriff des Anspruchs 1.

In der Landwirtschaft ist es bekannt, zum Mischen von Futtermitteln wie Silage, Mais, Kraftfutter etc. Futtermischwagen zu verwenden, die einen oben offenen Mischbehälter aufweisen, in dem mindestens ein um eine vertikale Drehachse drehbares Mischwerkzeug in Form einer Mischschnecke angeordnet ist. Futtermischwagen mit um eine horizontale Drehachse drehbaren Mischschnecken sind ebenfalls bekannt.

Futtermischwagen mit vertikalen Mischschnecken weisen üblicherweise eine Austragsöffnung auf, die sich in der Seitenwand des Mischbehälters befindet und sich vom Boden des Mischbehälters nach oben erstreckt. Die Austragsöffnung ist während des Mischvorgangs mittels eines Schiebers verschlossen. Zum dosierten Ausbringen des fertig gemischten Futtermittels, beispielsweise auf ein Querförderband, wird der Schieber in vorbestimmter Weise geöffnet. Die sich weiterdrehende Mischschnecke befördert dann das Futtermittel durch die Austragsöffnung hindurch nach außen.

Die bekannten Schieber sind üblicherweise an der äußeren Wandfläche der Behälterwand verschiebbar geführt, wobei sie die Austragsöffnung seitlich begrenzenden Randbereiche der Behälterwand außen überlappen.

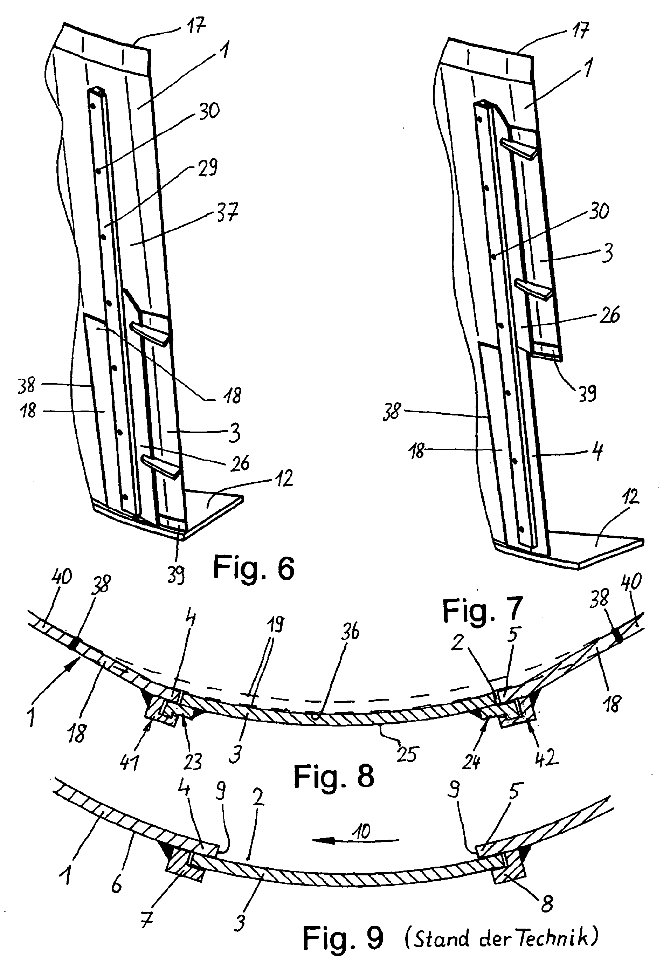

Eine schematische Darstellung eines Horizontalschnitts durch einen Mischbehälter eines üblichen Vertikalfuttermischwagens im Bereich des Schiebers ist in Figur 9 dargestellt. Dieser bekannte Futtermischwagen weist - wie ausschnittsweise dargestellt - einen Mischbehälter mit einer in der Draufsicht kreisförmigen seitlichen Behälterwand 1 mit einer Austragsöffnung 2 auf, die von einem außenseitigen Schieber 3 verschließbar ist. Der Schieber 3 überlappt die beiden seitlichen Randbereiche 4, 5 der Behälterwand 1 an ihrer äußeren Wandfläche 6. Weiterhin ist der Schieber 3 durch behälterseitige Führungsprofile 7, 8 verschiebbar an der Behälterwand 1 geführt. Hierdurch kann der Schieber 3 zwischen einer unteren Verschlussstellung, in welcher er die Austragsöffnung 2 vollkommen abdeckt, und einer oberen Öffnungsstellung linear verschoben werden. Das Öffnen und Schließen des Schiebers 3 erfolgt üblicherweise mittels eines nicht dargestellten Hydraulikzylinders.

Nachteilig ist bei diesem bekannten Mischbehälter, dass im Bereich der Austragsöffnung 2 seitliche Stufen 9 zwischen Behälterwand 1 und Schieber 3 vorhanden sind. Wird beim Mischvorgang das Futtermittel mittels der Mischschnecke, beispielsweise in Richtung des Pfeils 10, in Umdrehung versetzt, verursacht die in Umdrehungsrichtung vorne liegende Stufe 9, d.h. in Figur 9 die linke Stufe 9, eine Störung des Materialflusses und erhöht den Widerstand beim Mischvorgang, wodurch der Kraftbedarf zum Antrieb der Mischschnecke erhöht wird. Durch den Materialfluss entsteht ein erhöhter Verschleiß an der linken Stufe 9.

Ein Mischbehälter gemäß dem Oberbegriff des Anspruches 1 ist aus der nachveröffentlichten WO 2012/074 377 A1 bekannt. Der Schieber ist dort bündig in die Seitenwand des Mischbehälters eingesetzt und kann zum Öffnen der Austragsöffnung über den oberen Rand des Mischbehälters hinaus verschoben werden. Die dort verwendete Schiebeführung kann jedoch nur bei Austragsöffnungen verwendet werden, die sich nach oben bis zum Rand der Behälterwand erstrecken.

Aus der NL 2000506 C2 ist ein Mischbehälter mit einer Austragsöffnung bekannt, die von einem in Umdrehungsrichtung des Mischwerkzeugs vorne liegenden Randbereich begrenzt ist, der zur Vermeidung einer nach innen vorstehenden Kante abgeschrägt ist.

Aus der US 4,741,625 ist ein Mischbehälter bekannt, bei dem der Schieber mittels einer Kulissenführung in einer mit der Behälterwand fluchtende Verschlussstellung gebracht werden kann.

Die DE 201 04 283 U1 zeigt eine Schieberführung, die ähnlich zu derjenigen ausgebildet ist, die in Figur 9 gezeigt ist.

Der Erfindung liegt die Aufgabe zugrunde, einen Mischbehälter der eingangs genannten Art zu schaffen, mit dem der Kraftbedarf zum Antrieb der Mischwerkzeugs verringert und ein möglichst gleichmäßiger, widerstandsreduzierter Materialfluss sowie ein verringerter Verschleiß im Bereich der Behälterwand ermöglicht wird.

Diese Aufgabe wird erfindungsgemäß durch einen Mischbehälter mit den Merkmalen des Anspruchs 1 gelöst. Vorteilhafte Ausgestaltungen der Erfindung sind in den weiteren Ansprüchen beschrieben.

Beim erfindungsgemäßen Mischbehälter ist der die Austragsöffnung seitlich begrenzende Randbereich der Behälterwand relativ zum in Verschieberichtung des Schiebers anschließenden Abschnitt der Behälterwand derart nach außen versetzt, dass der Schieber mittels einer Linearverschiebung von seiner Verschlussstellung, in der er innerhalb der Austragsöffnung angeordnet ist, in seine Öffnungsstellung bewegbar ist, in der er sich außerhalb des anschließenden Abschnitts der Behälterwand befindet.

Durch den bündigen, stufenlosen Übergang zwischen der inneren Wandfläche des Schiebers und der inneren Wandfläche der Behälterwand kommt es zu keiner widerstandserhöhenden Störung des Materialflusses beim Mischvorgang im Bereich der Austragsöffnung und zu einer Reduzierung des Kraftbedarfs für den Antrieb des Mischwerkzeugs, insbesondere der Mischschnecke. Weiterhin lässt sich die erfindungsgemäße Anordnung mittels einer einfachen Konstruktion realisieren. Der Verschleiß im Übergangsbereich zwischen Schieber und Behälterwand wird reduziert.

Zum Erreichen der erfindungsgemäßen Vorteile ist es prinzipiell ausreichend, dass der bündige Übergang zwischen Schieber und Behälterwand in demjenigen seitlichen Randbereich der Austragsöffnung vorgesehen ist, der - in Umdrehungsrichtung des Mischwerkzeugs gesehen - vorne liegt. Vorteilhaft ist es jedoch, wenn auf beiden Seiten der Austragsöffnung ein bündiger, stufenloser Übergang der inneren Wandflächen geschaffen wird.

Gemäß einer vorteilhaften Ausführungsform ist eine Schieberführung mit zwei geradlinigen behälterseitigen Führungsprofilen vorgesehen. Zumindest das, in Umdrehungsrichtung des Mischwerkzeugs gesehen, vordere Führungsprofil erstreckt sich längs eines den Randbereich aufweisenden Rundhalsabschnittes der Behälterwand und über den in Verschieberichtung des Schiebers anschließenden Abschnitt der Behälterwand und weist eine parallel zur Behälterwand verlaufende Führungsfläche auf, die im an - Abschnitt der Behälterwand einen größeren Abstand zur Behälterwand aufweist als im Randabschnitt. Auf diese Weise kann eine sehr einfache lineare Schieberführung realisiert werden.

Gemäß einer vorteilhaften Ausführungsform weisen die behälterseitigen Führungsprofile eine zur Behälterwand hin offene Führungsnut auf, wobei am Schieber schieberseitige Führungsprofile mit einer nach außen vorstehenden Führungsleiste vorgesehen sind, welche in die Führungsnut eingreift und in dieser längsverschiebbar geführt ist.

Gemäß einer vorteilhaften Ausführungsform ist der die Austragsöffnung seitlich begrenzende Randbereich der Behälterwand Teil eines separaten Wandelements aus verschleißfestem Material, das mit der benachbarten Behälterwand verschweißt ist. Hierdurch kann der seitliche Randbereich aus einem anderen Material wie die übrige Behälterwand gefertigt werden, beispielsweise aus verschleißfestem Edelstahl, während die übrige Behälterwand aus einem normalen, preisgünstigeren Stahl bestehen kann.

Gemäß einer vorteilhaften Ausführungsform ist der in Schließrichtung vordere Rundbereich des Schiebers als Schneide ausgebildet. Hierdurch ergibt sich ein leichteres Schließen des Schiebers, wenn Futter in der Austragsöffnung liegen bleibt. Durch geringere Schließkräfte kann der Verschleiß reduziert werden. Weiterhin wird beim Schließen des Schiebers das Futtermittel im Bereich der Austrittsöffnung abgeschnitten, so dass weniger Rückstände außerhalb des Schiebers liegen bleiben, die beim Verfahren des Futtermischwagens verstreut werden.

Die Erfindung wird nachfolgend anhand der Zeichnung beispielhaft näher erläutert. Es zeigen:
- Figur 1:: eine Außenansicht eines Teils eines erfindungsgemäßen Mischbehälters mit geschlossenem Schieber;
- Figur 2:: eine der Figur 1 entsprechende Darstellung mit geöffnetem Schieber;
- Figur 3:: einen Horizontalschnitt durch einen Übergangsbereich zwischen Behälterwand und Schieber, wobei sich der Schieber in seiner in die Austragsöffnung eingesetzten Verschlussstellung befindet;
- Figur 4:: einen Horizontalschnitt gemäß Figur 3 in einer Höhe, die sich oberhalb der Austragsöffnung befindet, wobei sich der Schieber in seiner Öffnungsstellung befindet;
- Figur 5:: einen Ausschnitt der Darstellung von Figur 3 in vergrößerter Darstellung;
- Figur 6:: einen Detailausschnitt des Mischbehälters bei geschlossenem Schieber;
- Figur 7:: einen der Figur 6 entsprechenden Detailausschnitt bei geöffnetem Schieber;
- Figur 8:: einen schematischen Horizontalschnitt durch den geschlossenen Schieber und die angrenzende Behälterwand; und
- Figur 9:: einen schematischen Horizontalschnitt durch den geschlossenen Schieber und die angrenzende Behälterwand gemäß dem Stand der Technik.

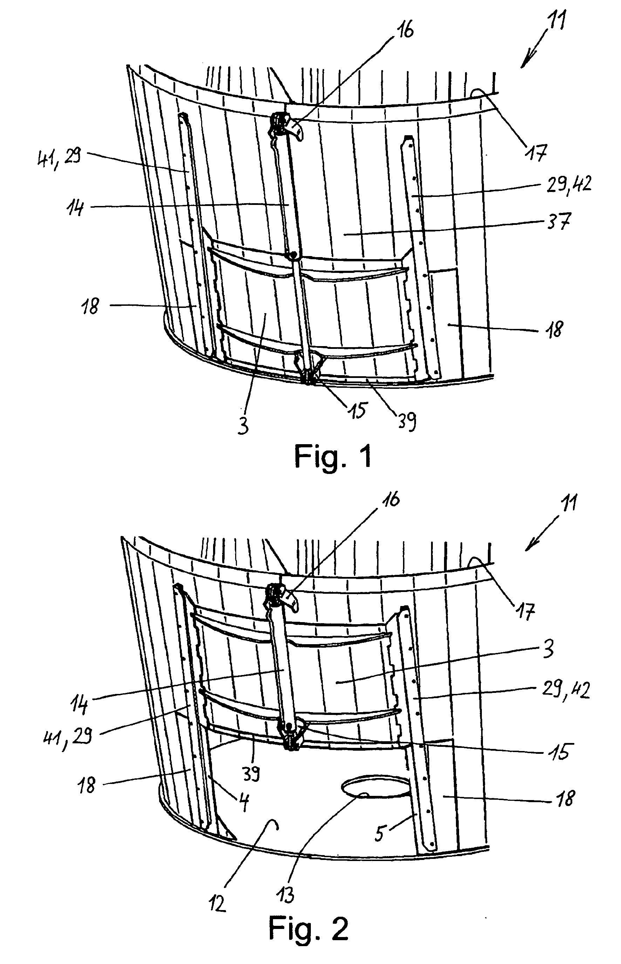

Aus den Figuren 1 und 2 ist ein Teil eines Mischbehälters 11 eines Futtermischwagens ersichtlich, der einen kreisscheibenförmigen, ebenen Boden 12 und eine sich vom Boden 12 nach oben erstreckende, umlaufende seitliche Behälterwand 1 umfasst. Der Mischbehälter 11 ist oben offen, so dass Futtermittel von oben her eingefüllt werden kann.

Im Zentrum des Bodens 12 ist eine Bodenöffnung 13 vorgesehen, über der eine nicht dargestellte Mischschnecke angeordnet ist, die um eine vertikale Drehachse drehbar ist.

Zum Ausbringen des fertig gemischten Futtermittels ist in der Behälterwand 1 eine rechteckige Austragsöffnung 2 vorgesehen, die sich vom Boden 12 über einen Teil der Höhe des Mischbehälters 11 nach oben erstreckt.

Die Austragsöffnung 2 kann mittels eines Schiebers 3 verschlossen und geöffnet werden. Die Bewegung des Schiebers 3 zwischen seiner unteren Verschlussstellung, die in Figur 1 dargestellt ist, und seiner oberen Öffnungsstellung, die in Figur 2 dargestellt ist, erfolgt über einen Hydraulikzylinder 14, der einerseits über eine untere Konsole 15 am Schieber 3 und andererseits über eine obere Konsole 16 an der Behälterwand 1 angelenkt ist.

Der Schieber 3 ist in seinen beiden seitlichen Randbereichen mittels geradliniger Führungsprofile 41, 42 linear geführt, die beidseits der Austragsöffnung 2 angeordnet sind und sich parallel zur Behälterwand 1 von einem bodennahen Bereich nach oben über die Austragsöffnung 2 hinaus in Richtung des oberen Randes 17 des Mischbehälters 11 erstrecken. Details zu dieser Schieberführung werden später noch näher erläutert.

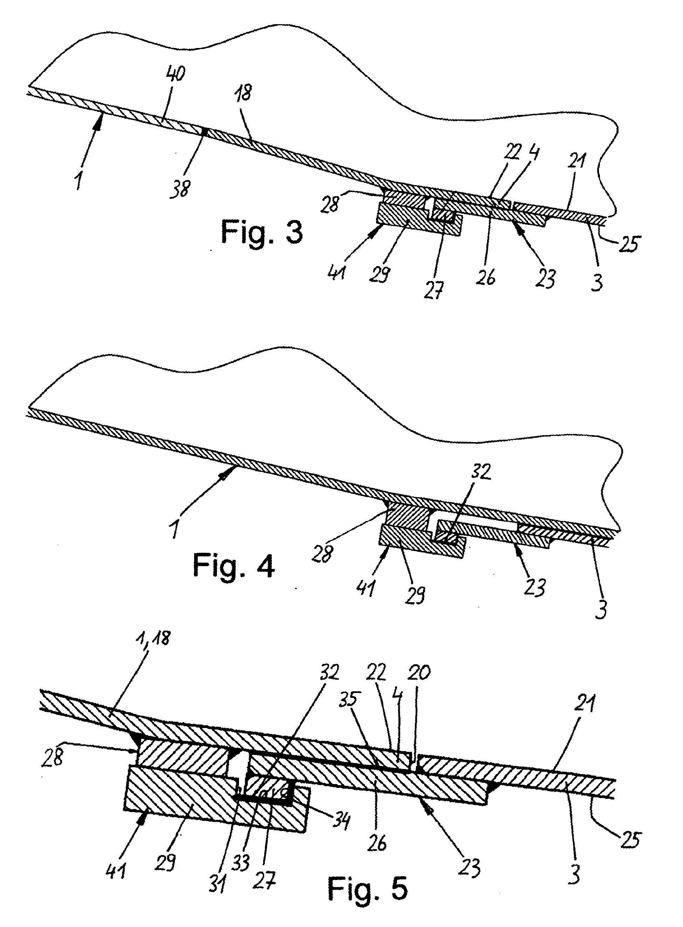

Wie schematisch in Figur 8 sowie detailliert in den Figuren 3 und 5 dargestellt, ist die Behälterwand 1 so gestaltet, dass dann, wenn sich der Schieber 3 in seiner Verschlussstellung befindet, auf der Innenseite der Behälterwand 1 ein kontinuierlicher, fluchtender Übergang zwischen den beiden seitlichen Randbereichen 4, 5, welche die Austragsöffnung 2 beidseits begrenzen, und dem Schieber 3 vorhanden ist. Weiterhin ist der Schieber 3 etwas weniger breit als die Austragsöffnung 2, so dass der Schieber 3 mit geringem Abstand zwischen den Stirnwänden 20 der seitlichen Randbereiche 4, 5 eingefügt werden kann. Die innere Wandfläche 21 des Schiebers geht dabei stufenlos in die inneren Wandflächen der seitlichen Randbereiche 4, 5 der Behälterwand 1 über. Die radial nach innen vorstehenden Stufen 9, wie bei der in Figur 9 dargestellten Austragsöffnung gemäß dem Stand der Technik vorhanden, entfallen.

Wie insbesondere aus den Figuren 3 und 8 ersichtlich, befinden sich die Randbereiche 4, 5 an Randabschnitten 18 der Behälterwand 1, die im gezeigten Ausführungsbeispiel aus separaten Wandelementen (Übergangsblechen) bestehen. Diese Wandelemente bestehen aus einem Material mit erhöhter Verschleißfestigkeit, insbesondere aus Edelstahl, und sind mit den seitlich benachbarten Bereichen 40 der Behälterwand 1 mit Schweißverbindungen 38 verschweißt.

Die Randabschnitte 18 der Behälterwand 1 sind, ausgehend von den Schweißverbindungen 38, relativ zu einer theoretischen Kontur 19, die in Figur 8 gestrichelt dargestellt ist, in Richtung zur Austragsöffnung 2 hin zunehmend nach außen gezogen. Die theoretische Kontur 19 ist im gezeigten Ausführungsbeispiel eine Kreiskontur, welche durch die gleichmäßige Fortführung der Krümmung, welche die an die Randabschnitte 18 anschließenden Bereiche 40 der Behälterwand 1 haben, gebildet wird. Im Bereich der Schweißverbindungen 38 verlaufen die Randabschnitte 18 zumindest annähernd tangential zu den seitlich angrenzenden Bereichen 40 der Behälterwand 1. Die Randbereiche 4, 5 sind um ein Maß gegenüber der Kontur 19 nach außen versetzt, das mindestens der Dicke der Behälterwand 1 entspricht. Die innere Wandfläche 21 des Schiebers 3 befindet sich damit geringfügig außerhalb der äußeren Wandfläche der Kontur 19. Derjenige Abschnitt 37 der Behälterwand 1, der oberhalb der Austragsöffnung 2 liegt, folgt jedoch der Kontur 19 und ist somit relativ zur Austragsöffnung 2 radial nach innen versetzt. Auf diese Weise ist es möglich, den Schieber 3 mittels einer Linearverschiebung von seiner Verschlussstellung in seine Öffnungsstellung zu verschieben, wobei der Schieber 3 an der Außenseite des oberen Abschnitts 37 der Behälterwand 1 entlanggeführt wird.

Die Führung des Schiebers 3 in den behälterseitigen Führungsprofilen 41, 42 erfolgt über schieberseitige Führungsprofile 23, 24. Diese Führungsprofile 23, 24 sind längs der Seitenränder des Schiebers 3 angeordnet und erstrecken sich über diese seitlich nach außen. Im dargestellten Ausführungsbeispiel sind die schieberseitigen Führungsprofile 23, 24 im Querschnitt L-förmig und weisen einen seitlich über den Schieber 3 vorstehenden, an der äußeren Wandfläche 25 des Schiebers 3 befestigten ersten Profilschenkel 26 und eine Führungsleiste 27 auf, die vom ersten Profilschenkel 26 nach außen vorsteht und den zweiten Profilschenkel bildet. Die behälterwandseitigen Führungsprofile 41, 42 weisen geradlinige, an den Randabschnitten 18 befestigte Abstandshalterleisten 28 sowie von den Abstandshalterleisten 28 in Richtung Austragsöffnung 2 vorstehende Führungsleisten 29 auf, die an den Abstandhalterleisten 28 befestigt, insbesondere mittels Schrauben 30 (Figur 6 und 7) festgeschraubt sind. Die Führungsleisten 29 weisen eine zur Behälterwand 1 hin offene Führungsnut 31 auf, in der die schieberseitige Führungsleiste 27 längsverschiebbar geführt ist.

Wie aus Figur 5 ersichtlich, können diejenigen Nutflächen, die mit den schieberseitigen Führungsleisten 27 in Kontakt kommen, mit einem reibungsmindernden Gleitbelag 32 versehen sein. Die schieberseitigen Führungsleisten 27 werden dabei an ihrer außenseitigen Führungsfläche 33 und auch an der rechtwinklig zu dieser angeordneten Führungsfläche 34 geführt, die zur Austragsöffnung 2 hin gerichtet ist. Weiterhin sind auch zwischen den Randabschnitten 18 der Behälterwand 1 und den ersten Profilschenkeln 26 der schieberseitigen Führungen reibungsmindernde Gleitbeläge 35 vorgesehen.

Der untere Randbereich des Schiebers 3 ist als Schneide 39 ausgebildet, wie in den Figuren 1, 2, 6, 7 angedeutet. Hierdurch kommt es beim Schließen des Schiebers 3 zu einem sauberen Abschneiden des sich in der Austragsöffnung 2 befindenden Futtermittels.

Im Rahmen der Erfindung sind eine Vielzahl von Variationen möglich. Beispielsweise ist es möglich, das erfinderische Prinzip nicht nur bei vertikal verschiebbaren Schiebern 3 einzusetzen, sondern auch bei Schiebern, bei denen die Verschieberichtung horizontal oder in einem anderen Winkel verläuft. Weiterhin ist es nicht erforderlich, dass die Behälterwand 1 kreisförmig um die Drehachse des Mischwerkzeugs herumgeführt ist. Vielmehr kann sich der Schieber auch in Bereichen der Behälterwand 1 befinden, die eine andere Krümmung, beispielsweise eine ovale Krümmung, haben. Es ist sogar denkbar, das erfindungsgemäße Prinzip in ebenen Behälterwänden anzuwenden. Die Randabschnitte 18 der Behälterwand 1 müssen nicht aus separaten Wandelementen bestehen, sondern können einteilig aus der angrenzenden Behälterwand herausgeformt sein.

## Patentansprüche

1. Mischbehälter für Futtermischwagen mit
- einer Behälterwand (1),
- einer in der Behälterwand (1) vorgesehenen Austragsöffnung (2), die von seitlichen Randbereichen (4, 5) der Behälterwand (1) seitlich begrenzt ist,
- einem Schieber (3), der an der Behälterwand (1) verschiebbar geführt und zwischen einer die Austragsöffnung (2) verschließenden Verschlussstellung und einer Öffnungsstellung verschiebbar ist,
- einem drehbaren Mischwerkzeug zum Mischen des Futtermittels;
- wobei die innere Wandfläche (22) zumindest desjenigen die Austragsöffnung (2) seitlich begrenzenden Randbereichs (4, 5) der Behälterwand (1), der, in Umdrehungsrichtung des Mischwerkzeugs gesehen, vorne liegt, in der Verschlussstellung des Schiebers (3) bündig zur inneren Wandfläche (21) des benachbarten seitlichen Randbereichs (4, 5) des Schiebers (3) ist,
**dadurch gekennzeichnet, dass** der die Austragssöffnung (2) seitlich begrenzende Randbereich (4, 5) der Behälterwand (1) relativ zum in Verschieberichtung des Schiebers (3) anschließenden Abschnitt der Behälterwand (1) derart nach außen versetzt ist, dass der Schieber (3) mittels einer Linearverschiebung von seiner Verschlussstellung, in der er innerhalb der Austragsöffnung (2) angeordnet ist, in seine Öffnungsstellung bewegbar ist, in der er sich außerhalb des anschließenden Abschnitts der Behälterwand (1) befindet.

2. Mischbehälter nach Anspruch 1, **dadurch gekennzeichnet, dass** eine Schieberführung mit zwei geradlinigen behälterseitigen Führungsprofilen (41, 42) vorgesehen ist, wobei sich zumindest das, in Umdrehungsrichtung des Mischwerkzeugs gesehen, vordere Führungsprofil (41, 42) längs eines den Randbereich (4, 5) aufweisenden Randabschnitts (18) der Behälterwand (1) und über den in Verschieberichtung des Schiebers (3) anschließenden Abschnitt der Behälterwand (1) erstreckt und eine parallel zur Behälterwand (1) verlaufende Führungsfläche aufweist, die im anschließenden Abschnitt der Behälterwand (1) einen größeren Abstand zur Behälterwand (1) aufweist als im Randabschnitt (18).

3. Mischbehälter nach Anspruch 2, **dadurch gekennzeichnet, dass** die behälterseitigen Führungsprofile (41, 42) eine zur Behälterwand (1) hin offene Führungsnut (31) aufweisen, und dass am Schieber (3) schieberseitige Führungsprofile (23, 24) mit einer nach außen vorspringenden Führungsleiste (27) vorgesehen sind, welche in die Führungsnut (31) eingreift und in dieser längsverschiebbar geführt ist.

4. Mischbehälter nach Anspruch 3, **dadurch gekennzeichnet, dass** die schieberseitigen Führungsprofile (23, 24) im Querschnitt L-förmig sind und einen seitlich über den Schieber (3) vorstehenden, an der äußeren Wandfläche (25) des Schiebers (3) befestigten ersten Profilschenkel (26) und einen vom ersten Profilschenkel (26) nach außen vorstehenden zweiten Profilschenkel aufweist, der von der Führungsleiste (27) gebildet wird.

5. Mischbehälter nach einem der vorhergehenden Ansprüche, **dadurch gekennzeichnet, dass** der die Austragsöffnung (2) seitlich begrenzende Randbereich (4, 5) der Behälterwand (1) Teil eines separaten Wandelements aus verschleißfestem Material ist, das mit der benachbarten Behälterwand (1) verschweißt ist.

6. Mischbehälter nach einem der vorhergehenden Ansprüche, **dadurch gekennzeichnet, dass** der in Schließrichtung vordere Randbereich des Schiebers (3) als Schneide (39) ausgebildet ist.

## Claims

1. Mixing container for feed-mixing vehicles, comprising:
- a container wall (1),
- a discharge opening (2) provided in the container wall (1), which opening is laterally delimited by lateral edge regions (4, 5) of the container wall (1),
- a slider (3), which is displaceably guided on the container wall (1) and is displaceable between a closed position which closes the discharge opening (2) and an open position,
- a rotatable mixing tool for mixing the feed,
- the inner wall surface (22) at least of the edge region (4, 5), which laterally delimits the discharge opening (2) and is at the front when viewed in the direction of rotation of the mixing tool, of the container wall (1) is flush with the inner wall surface (21) of the adjacent lateral edge region (4, 5) of the slider (3) in the closed position,
**characterised in that** the edge region (4, 5) of the container wall (1), which region laterally delimits the discharge opening (2), is displaced outwards relative to the portion, which adjoins in the displacement direction of the slider (3), of the container wall (1) such that the slider (3) can be moved from its closed position, in which it is arranged inside the discharge opening (2), into its open position, in which is it positioned outside the adjoining portion of the container wall (1).

2. Mixing container according to claim 1, **characterised in that** a slider guide is provided with two straight, container-side guide profiles (41, 42), at least the front, when viewed in the direction of rotation of the mixing tool, guide profile (41, 42) extending along an edge portion (18), comprising the edge region (4, 5), of the container wall (1) and over the portion, which adjoins in the displacement direction of the slider (3), of the container wall (1) and comprising a guide surface extending parallel to the container wall (1), which guide surface has a greater distance from the container wall (1) in the adjoining portion of the container wall (1) than in the edge portion (18).

3. Mixing container according to claim 2, **characterised in that** the container-side guide profiles (41, 42) comprise a guide groove (31) which is open towards the container wall (1), and **in that**, on the slider (3), slider-side guide profiles (23, 34) are provided with an outwardly projecting guide strip (27), which engages in the guide groove (31) and is guided therein in a longitudinally displaceable manner.

4. Mixing container according to claim 3, **characterised in that** the slider-side guide profiles (23, 24) are L-shaped in cross section and comprise a first profiled leg (26) which is attached to the outer wall surface (25) of the slider (3) and projects laterally over the slider (3) and a second profiled leg which projects outwards from the first profiled leg (26) and is formed by the guide strip (27).

5. Mixing container according to any of the preceding claims, **characterised in that** the edge region (4, 5) of the container wall (1), which region laterally delimits the discharge opening (2), is part of a separate wall element made from wear-resistant material which is welded to the adjacent container wall (1).

6. Mixing container according to any of the preceding claims, **characterised in that** the edge region of the slider (3), which region is at the front in the closure direction, is formed as a cutting edge (39).

## Revendications

1. Récipient de mélange pour chariot de mélange de produits alimentaires pour animaux, comprenant
- une paroi de récipient (1),
- une ouverture de sortie (2) ménagée dans la paroi de récipient (1), qui est latéralement limitée par des zones de bordures latérales (4, 5) de la paroi de récipient (1),
- un poussoir (3), qui est mené en déplacement contre la paroi de récipient (1) et qui est déplaçable entre une position d'obturation qui obture l'ouverture de sortie (2) et une position ouverte,
- un outil de mélange rotatif pour mélanger le produit alimentaire ;
- dans lequel la surface de paroi intérieure (22), au moins de la zone de bordure (4, 5), de la paroi de récipient (1), qui délimite latéralement l'ouverture de sortie (2) et qui se trouve en avant, vue dans la direction de rotation de l'outil de mélange, se trouve dans la position d'obturation du poussoir (3) en affleurement avec la surface de paroi intérieure (21) de la zone de bordure latérale voisine (4, 5) du poussoir (3),
**caractérisé en ce que** la zone de bordure (4, 5), de la paroi de récipient (1), qui délimite latéralement l'ouverture de sortie (2) est décalée vers l'extérieur par rapport au tronçon de la paroi de récipient (1) qui se raccorde en direction de déplacement du poussoir (3), de telle façon que le poussoir (3) est déplaçable, au moyen d'un déplacement linéaire, depuis sa position d'obturation dans laquelle il est agencé à l'intérieur de l'ouverture de sortie (2), jusque dans sa position ouverte dans laquelle il se trouve à l'extérieur du tronçon successif de la paroi de récipient (1).

2. Récipient de mélange selon la revendication 1, **caractérisé en ce qu'**il est prévu un guidage du poussoir avec deux profilés de guidage (41, 42) rectilignes du côté du récipient, et au moins le profilé de guidage antérieur (41, 42), vu dans la direction de rotation de l'outil de mélange, s'étend le long d'un tronçon de bordure (18), de la paroi de récipient (1) qui présente la zone de bordure (4, 5) et au-delà du tronçon, de la paroi de récipient (1) qui s'y raccorde en direction de déplacement du poussoir (3), et comporte une surface de guidage s'étendant parallèlement à la paroi de récipient (1), qui présente dans le tronçon qui s'y raccorde de la paroi de récipient (1), une distance plus grande vis-à-vis de la paroi de récipient (1) que dans le tronçon de bordure (8).

3. Récipient de mélange selon la revendication 2, **caractérisé en ce que** les profilés de guidage (41, 42) du côté de récipient comportent une gorge de guidage (31) ouverte vers la paroi de récipient (1), et **en ce que** les profilés de guidage (23, 24) sur le poussoir (3) du côté de celui-ci sont pourvus d'une barrette de guidage (27) en saillie vers l'extérieur, laquelle s'engage dans la gorge de guidage (31) et est guidée en déplacement longitudinal dans celle-ci.

4. Récipient de mélange selon la revendication 3, **caractérisé en ce que** les profilés de guidage (23, 24) du côté du poussoir ont une section transversale en forme de L et comprennent une première branche de profilé (26) qui dépasse latéralement au-delà du poussoir (3) et est fixée à la surface de paroi extérieure (25) du poussoir (3), et une seconde branche de profilé qui dépasse vers l'extérieur depuis la première branche de profilé (26) et est formée par la barrette de guidage (27).

5. Récipient de mélange selon l'une des revendications précédentes, **caractérisé en ce que** la zone de bordure (4, 5), de la paroi de récipient (1), qui limite latéralement l'ouverture de sortie (2) fait partie d'un élément de paroi séparé en matériau résistant à l'usure, qui est soudé sur la paroi de récipient voisine (1).

6. Récipient de mélange selon l'une des revendications précédentes, **caractérisé en ce que** la zone de bordure antérieure, en direction de fermeture, du poussoir (3) est réalisée sous forme de tranchant (39).
